# EUROPÄISCHE PATENTSCHRIFT

(11) **EP 3 188 995 B1**
(45) Veröffentlichungstag und Bekanntmachung des Hinweises auf die Patenterteilung: **31.07.2019**
(21) Anmeldenummer: 15837500.6
(22) Anmeldetag: 17.06.2015
(51) Int. Cl.: B65H 43/04, B65H 29/62, B31B 50/00, G05B 19/418

(54) **VERFAHREN ZUR STEUERUNG EINER FALTSCHACHTELMASCHINE ZUR QUALITÄTSSICHERUNG**
METHOD FOR CONTROLLING A FOLDING BOX MACHINE FOR QUALITY ASSURANCE PURPOSES
PROCÉDÉ DE COMMANDE D'UNE MACHINE POUR BOÎTES PLIANTES POUR ASSURANCE DE LA QUALITÉ

(30) Priorität: 04.09.2014 DE 102014013166
(43) Veröffentlichungstag der Anmeldung: 12.07.2017
(73) Patentinhaber: Masterwork Group Co., Ltd., Beichen Science and Technology Area Tianjin 300400 (CN)
(72) Erfinder: DIEHR, Wolfgang, 41515 Grevenbroich (DE); HAMMER, Mark, 40597 Düsseldorf (DE); SCHMID, Frank Matthias, 47087 Krefeld (DE)
(74) Vertreter: Strehl Schübel-Hopf & Partner
(86) Internationale Anmeldenummer: PCT/IB2015/000984
(87) Internationale Veröffentlichungsnummer: WO 2016/034926

(56) Entgegenhaltungen:
- EP-A2- 1 964 779
- EP-B1- 2 422 969
- CN-A- 101 229 695
- US-A1- 2012 053 031
- US-A1- 2013 184 133
- US-B1- 8 073 239

## Beschreibung

Die Erfindung betrifft ein Verfahren zur Steuerung einer Faltschachtelmaschine mit den Merkmalen von Anspruch 1.

### Stand der Technik

Bei der Produktion von hochwertigen Druckprodukten, beispielsweise Faltschachteln für die Pharma- und Kosmetikindustrie, werden hohe Anforderungen an die Qualität sowohl der bedruckten Bogen, als auch der ausgestanzten Faltschachtelzuschnitte bis hin zu den fertig gefalzten und geklebten Faltschachteln, und zusätzlich von der Pharmaindustrie hohe Anforderungen an die Exaktheit der Aufdrucke sowie der Brailleprägungen der hergestellten Faltschachteln gestellt. Dies macht bereits bei der Herstellung während des gesamten Produktionsworkflows eine Fehlerkontrolle notwendig, beispielsweise auf folgende Qualitätsmerkmale:
- Papierfehler wie z.B. Kartoneinschlüsse
- Fremde Partikel, z.B. Staub, unerwünschte Folienreste, Stanzabfälle, Aufkleber und Leimreste
- Farbabweichungen oder Lackfehler (fehlender Lack, Lack auf unerwünschten Flächen, Lackspritzer), unscharfe Konturen
- Registerversatz
- Textfehler
- Fehler in der Heißfolienprägung (Löcher in der Fläche, ausgefranste Kanten, fehlende Flächen)
- Kratzer und mechanische Fehler in der Bogenoberfläche (im unbedruckten Karton, im Druckbild, im Lack oder in der Folie)
- Matrixcodes
- Fehlende Fenster oder andere Applikationen aus vorgelagerten Produktionsschritten
- Sortenreinheit der Nutzen
- Übereinstimmung von Strichcodes und/oder Brailleprägungen mit der lesbaren Inhaltsangabe
- Exaktheit der Brailleprägungen bezüglich Position, Volumen und Höhe der Braillepunkte

Zur Herstellung von Faltschachteln werden die Bögen zunächst in einer Druckmaschine bedruckt. Auf den Bögen bzw. Bahnen sind jeweils mehrere Nutzen der herzustellenden Faltschachteln aufgedruckt, die dann in einer Stanze ausgestanzt werden. Die ausgestanzten Faltschachtelzuschnitte werden anschließend einer Faltschachtelklebemaschine zugeführt und hier zu Faltschachteln verarbeitet.

Faltschachtelklebemaschinen zur Herstellung von Faltschachteln aus Faltschachtelzuschnitten weisen bekanntermaßen zumindest die folgenden Module als Bearbeitungsstationen auf:
- Einen Einleger, der die zu verarbeitenden Zuschnitte mit hoher Geschwindigkeit aus einem Stapel nacheinander abzieht und einzeln der nachfolgenden ersten Bearbeitungsstation zuführt,
- Ein Auftragwerk für Klebstoff, üblicherweise Leim, das auf die zu verklebenden Faltlappen einen Klebstoffstreifen aufträgt und
- Eine Faltstation, in der die mit einem Klebestreifen versehenen Zuschnittteile zur Herstellung einer Klebeverbindung um 180° umgelegt, also gefaltet werden.
- Im Anschluss an die Faltstation ist üblicherweise eine sogenannte Überleitstation angeordnet, in der die Schachteln gezählt, markiert und - falls schadhaft - ausgeschleust werden können.
- Danach folgt eine Pressstation, an deren Anfang ein Schuppenstrom aus gefalteten Zuschnitten gebildet wird, der in der Pressstation für einige Zeit unter Druck gehalten wird, damit die beiden Zuschnitte an der Klebenaht verbunden werden.

Die einzelnen Bearbeitungsstationen weisen zum Transport der Faltschachtelzuschnitte angetriebene Fördermittel auf. Diese bestehen beispielsweise aus jeweils einem an der Seite der Maschine angeordneten oberen und unteren Förderriemen, wobei der untere Förderriemen in einer Rollenwange und der obere Förderriemen in einer Rollschiene geführt sind. Die Förderriemen sind querverstellbar angeordnet und können somit auf das jeweilige Faltschachtelzuschnittformat eingestellt werden. Die Zuschnitte werden mit der bedruckten Seite nach unten zwischen dem oberen und unteren Förderriemen transportiert.

Im Rahmen der Serienproduktion ist es sinnvoll, die möglichen Fehler inline zu kontrollieren, um zu gewährleisten, dass die hergestellten Produkte den Qualitätsanforderungen genügen.

So offenbart die EP 1 920 910 B1 eine Kontrolleinrichtung für Brailleprägungen mit einer nachgeordneten Ausschleusstation. Die Kontrolleinrichtung ist unmittelbar hinter einer Brailleprägeeinrichtung in einer Faltschachtelklebemaschine angeordnet.

Die EP 1 964 779 B1 offenbart ein Verfahren zur Qualitätsüberwachung von in einer Faltschachtelklebemaschine produzierten Faltschachteln. Durch Entnahme von vorgegebenen Stichproben in einer Packanlage kann der Maschinenbediener die Schachtelqualität regelmäßig überprüfen.

Aus der EP 2 422 969 B1 ist eine Faltschachtelklebemaschine bekannt mit einer Mehrzahl von Kontrolleinrichtungen. So werden eine Bildinspektionseinrichtung und eine Brailleprägekontrollvorrichtung vorgeschlagen. Die Daten der Kontrolleinrichtungen werden von einer gemeinsamen Steuereinheit ausgewertet. Sofern eine der Kontrolleinrichtungen einen Fehler detektiert, so wird eine Faltschachtel von einer nachgeordneten Ausschleusestation ausgeschleust.

US 8 073 239 B1 offenbart ein Steuerverfahren gemäß dem Oberbegriff des vorliegenden Anspruchs 1. Ein weiteres herkömmliches Steuerverfahren ist in US 2013/184133 A1 beschrieben.

Die bekannten Qualitätssysteme arbeiten heute so, dass alle Qualitätskriterien erfüllt sein müssen, damit eine Schachtel "gut" ist. D.h. eine Schachtel ist solange schlecht, bis alle Kontrollstellen gemeldet haben, dass sie "gut" ist. Hierdurch wird zum Beispiel auch sichergestellt, dass fehlende Qualitätskriterien z.B. bei Ausfall eines Sensors, wie "nicht gut" gewertet werden, sodass diese Schachteln auch aussortiert werden.

Die Industrie gibt Qualitätskriterien im sogenannten AQL für Faltschachteln vor. AQL steht für "Acceptable Quality Level", früher auch als "Accepted Quality Limit" bezeichnet, zu deutsch: annehmbare Qualitätsgrenzlage. Im AQL ist geregelt, welche Fehler wie häufig in einer definierten Stichprobe enthalten sein dürfen. Während die Konsumgüterindustrie, d.h. der Faltschachtelabnehmer, anstrebt, möglichst nur 100% fehlerfreie Faltschachteln zu erhalten, sind die Faltschachtelhersteller bemüht, die Fehlergrenzen maximal auszureizen, da sie so mit möglichst geringer Makulatur auskommen können.

### Aufgabenstellung

Aufgabe der vorliegenden Erfindung ist es, ein Verfahren zur Steuerung einer Faltschachtelmaschine zur Kontrolle der Qualität von Faltschachteln zu beschreiben, welches den Ausschuss reduziert und die Nachteile des Standes der Technik zumindest teilweise behebt.

Gelöst wird diese Aufgabe durch ein Verfahren zur Steuerung einer Faltschachtelmaschine mit den Merkmalen von Anspruch 1.

Das erfindungsgemäße Verfahren dient der Steuerung einer Faltschachtelmaschine, insbesondere einer Faltschachtelklebemaschine, mit einer Mehrzahl von Bearbeitungsstationen und einer Mehrzahl von Kontrolleinrichtungen mit Erfassungsmitteln, welche als Sensoren und Kameras ausgeführt sein können, zur Kontrolle der Qualität von Faltschachteln. Eine jeweilige Kontrolleinrichtung kontrolliert unterschiedliche, d.h. verschiedene Qualitätsmerkmale einer jeweiligen Faltschachtel und meldet das Ergebnis der Kontrolle an eine Steuereinheit, welche einen Rechner besitzt und eventuell mit einem Display und einem Bediener-Interface ausgestattet ist. In der Steuereinheit sind Sollwerte hinterlegt zur Klassifikation der Kontrollergebnisse in bezüglich der Qualität ausreichende Ergebnisse (also Qualität in Ordnung) und nicht ausreichende Ergebnisse (also Qualität nicht in Ordnung). Dadurch wird die Qualität einer jeweiligen Faltschachtel bestimmt. Abhängig von der Auswertung der Klassifikation aller Kontrollergebnisse durch die Steuereinheit wird von der Steuereinheit eine Ausschleuseinrichtung, z.B. eine Weiche, ein Tellerauswerfer oder ein Ausschleusband angesteuert, zum Ausschleusen einer Faltschachtel.

Erfindungsgemäß wird aus der Klassifikation aller Kontrollergebnisse für eine jeweilige Faltschachtel in der Steuereinheit ein digitaler String (zum Beispiel 001) aus binären Werten (zum Beispiel 0 und 1) erzeugt. Ein jeweiliger String steht somit für eine bestimmte Fehlerkombination.

Optional sind in der Steuereinheit Strings mit allen möglichen Kombinationen der binären Werte hinterlegt und für einen jeweiligen String ist festgelegt und kann auch durch den Maschinenbediener festgelegt werden, ob die zugehörige Faltschachtel auszuschleusen ist, weil in Summe die Qualität nicht ausreicht. Dadurch wird in der Steuereinheit ein Prüffilter gebildet.

Erfindungsgemäß ist für einen jeweiligen String in der Steuereinheit eine Fehlergrenze hinterlegt, d.h. eine prozentuale Angabe, wie häufig die bestimmte Fehlerkombination auftreten darf, bevor die zugehörige Faltschachtel auszuschleusen ist, bzw. ohne dass ein Auftragslos vom Kunden zurückgewiesen wird. Auch kann eine solche Fehlergrenze für eine Gruppe von Strings hinterlegt sein.

Bei den Qualitätsmerkmalen kann es sich um folgende handeln:
- Code am Klebelappen
- Druckbild
- Metallisierung oder Lackierung von Teilflächen
- Aufgedruckter Code korrekt
- Delta-E (Maß für den empfundenen Farbabstand)
- Qualität einer Schmuckprägung
- Fenster eingeklebt
- Braille Schrift vorhanden, komplett, richtig ausgeprägt, ...
- Leimnaht
- Rotation der Faltschachtel
- Längenkontrolle der Faltschachtel

Weiter wird auf die bereits weiter obenstehend aufgeführten Qualitätsmerkmale verwiesen. Die Erfindung betrifft auch ein Computerprogramm mit Programmcodemitteln, um das obenstehend beschriebene Verfahren durchzuführen, wenn das Computerprogramm auf einer mit einer Mehrzahl von Kontrolleinrichtungen wirkungsmäßig verbundenen Steuereinheit ausgeführt wird.

Die Erfindung betrifft auch einen computerlesbaren Datenträger auf dem das Computerprogramm gespeichert ist, um das obenstehend beschriebene Verfahren durchzuführen, wenn das Computerprogramm auf einer mit einer Mehrzahl von Kontrolleinrichtungen wirkungsmäßig verbundenen Steuereinheit ausgeführt wird.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figur noch näher erläutert werden. Zugunsten einer besseren Übersichtlichkeit der Figuren wurde auf eine maßstabsgetreue Darstellung verzichtet.

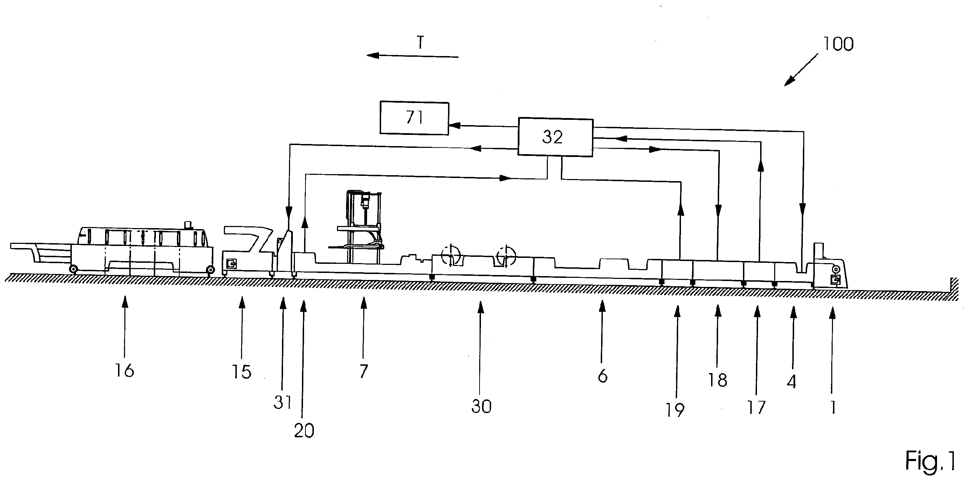

Es zeigt in schematischer Darstellung
- Fig. 1: eine Faltschachtelklebemaschine, welche erfindungsgemäß angesteuert wird.

Figur 1 zeigt eine erfindungsgemäße Ausführung einer Faltschachtelklebemaschine 100. Sie weist beispielhaft - in Transportrichtung T der Faltschachteln gesehen - folgende Bearbeitungsstationen auf: einen Einleger 1, eine Ausrichtestation 4, eine Kontrolleinichtung 17 zur zweidimensionalen Fehlerkontrolle, eine Brailleprägevorrichtung 18, gefolgt von einer Brailleprägekontrolleinrichtung 19, einen Vorbrecher 6, eine Aufrichteschachtelstation 30, eine Faltstation 7, eine weitere Kontrolleinrichtung 20, ein Ausschleusemodul 31, eine Überleitstation 15 sowie eine Sammel- und Presseinrichtung 16. Die Bearbeitungsstationen und ihre Reihenfolge ist nur beispielhaft. Ebenso ist die Anordnung und Anzahl von Kontrolleinrichtungen 17, 19, 20 lediglich beispielhaft. Wenn eine größere Anzahl von Qualitätsmerkmalen überprüft werden soll, so können auch deutlich mehr Kontrolleinrichtungen eingesetzt werden. Auch möglich ist, dass eine Kontrolleinrichtung mehrere Qualitätsmerkmale überprüft. Die Kontrollstation 17 ist mit einer Steuerung 32 verbunden. Sie liefert an diese Steuerung Daten über fehlerhafte Schachteln. In der Steuereinheit 32 erfolgt eine Auswertung der Kontrollergebnisse. Die Steuerung sendet in Abhängigkeit davon Signale an die Ausschleusestation 31 zur Ausschleusung dieser fehlerhaften Schachteln. In der Brailleprägekontrollvorrichtung 19 werden die Brailleprägungen hinsichtlich Höhe, Fläche und Volumen, also topographisch auf Fehler untersucht. Weiterhin wird die Position der Brailleprägung zur Schachtelkante sowie die Vollständigkeit und Korrektheit der Prägung analysiert. Die Daten werden dann entweder auf ein Display gegeben, damit der Bediener die entsprechenden Korrekturen manuell vornehmen kann, oder über die Steuerung 32 an die entsprechende Station zwecks automatisierter Verstellung bzw. Ausschleusung weitergeleitet. In der weiteren Kontrolleinrichtung 20 können weitere Schachtelmerkmale überprüft werden, z.B. die Qualität der Faltungen. Das Ergebnis der Kontrolle wird an die Steuerung 32 rückgemeldet.

Die Funktionsweise des Steuerungsverfahrens und der Qualitätskontrolle soll nachfolgend näher erläutert werden:
Jeder Schachtel wird eine beliebige Anzahl von Qualitätsmerkmalen bzw.

Qualitätskriterien in einer vorgegebenen Reihenfolge zugeordnet. Jedes Qualitätskriterium kann den Wert "1" oder "0" annehmen, d.h. "gut" oder "schlecht". Ein nicht geliefertes Signal wird wie "0" gewertet. Durch die Anzahl der Qualitätskriterien ergibt sich ein digitaler String, welcher auch als Schachtel-Ticket oder als Folding box Quality Format bezeichnet werden kann.

Nachfolgend sei ein Beispiel mit drei Qualitätskriterien, nämlich "Code am Klebelappen", "Schachtelrotation > 2°" und "Brailleschrift vorhanden" näher ausgeführt.

Mögliche Werte des Digitalen Strings sind:
000 Code falsch, Schachtelrotation > 2°, Brailleschrift fehlt
001 Code falsch, Schachtelrotation > 2°, Brailleschrift richtig
010 Code falsch, Schachtelrotation < 2°, Brailleschrift fehlt
100 Code richtig, Schachtelrotation > 2°, Brailleschrift fehlt
011 Code falsch, Schachtelrotation < 2°, Brailleschrift richtig
101 Code richtig, Schachtelrotation > 2°, Brailleschrift richtig
110 Code richtig, Schachtelrotation < 2°, Brailleschrift fehlt
111 Code richtig, Schachtelrotation < 2°, Brailleschrift richtig

Denkbare wäre, dass alle Schachteln mit 111 den Abtransport erreichen.

Darüber hinaus sind auch die Schachteln mit der Kennung 101 verwendbar, wenn die Schachtelrotation > 2° und eine hieraus resultierende Schiefklebung hingenommen wird.

Im Sinne der oben erwähnten AQL könnten auch Schachteln, die die Kennung 101 haben zu einem vorgegebenen prozentualen Anteil den Abtransport erreichen und diese erst dann ausgeschleust werden, wenn die maximal zulässige Fehlerzahl erreicht ist.

Alternativ werden die Schachteln mit der Kennung 101 nur markiert, damit sie für eine II. Wahl entnommen werden können oder werden über eine nicht näher beschriebene geeignete Sortieranlage einem anderen Abtransport zugeordnet.

Die Festlegung, ob eine Schachtel bei einem bestimmten String, d.h. einer bestimmten Fehlerkombination auszuschleusen ist, kann auch abhängig vom herzustellenden Produkt vorgeben werden. So kann beispielsweise für eine Pharmafaltschachtel bei nicht ausreichender Qualität von aufgedrucktem Text, Brailleschrift oder Code immer eine Ausschleusung erfolgen, unabhängig von den weiteren Qualitätsmerkmalen. Bei einer Kosmetikverpackung hingegen kann größerer Wert auf die optische Anmutung und Qualitätsmerkmale wie Schmuckprägungen, Metallisierung, Farbe, o.ä. gelegt werden.

Durch ein derartiges Steuerverfahren können folgende Vorteile erreicht werden:
- Mögliche Sortierung nach unterschiedlichen Qualitätskriterien I. Wahl, II. Wahl, III. Wahl
- Einhaltung der AQL
- Auswertung der AQL fortlaufend möglich, als gleitender Durchschnitt, in Losen von 1.000 Schachteln, etc.
- Variable Gestaltung der Qualitätskriterien in Abhängigkeit vom Kundensegment (Pharma, Kosmetik, Food, Non-Food, Süßwaren, ...) oder vom Kunden selbst
- und insgesamt eine Reduzierung des Ausschusses, d.h. der Makulatur.

## Patentansprüche

1. Verfahren zur Steuerung einer Faltschachtelmaschine (100), insbesondere einer Faltschachtelklebemaschine, mit einer Mehrzahl von Bearbeitungsstationen (4, 6, 7, 15, 18, 30) und einer Mehrzahl von Kontrolleinrichtungen (17, 19, 20) mit Erfassungsmitteln zur Kontrolle der Qualität von Faltschachteln,
wobei eine jeweilige Kontrolleinrichtung (17, 19, 20) unterschiedliche Qualitätsmerkmale einer jeweiligen Faltschachtel kontrolliert,
wobei eine jeweilige Kontrolleinrichtung (17, 19, 20) das Ergebnis der Kontrolle an eine Steuereinheit (32) meldet,
wobei in der Steuereinheit (32) Sollwerte hinterlegt zur Klassifikation der Kontrollergebnisse in bezüglich der Qualität ausreichende Ergebnisse und nicht ausreichende Ergebnisse sind, und
wobei abhängig von der Auswertung der Klassifikation aller Kontrollergebnisse von der Steuereinheit (32) eine Ausschleuseeinrichtung (31) zum Ausschleusen einer Faltschachtel angesteuert wird,
**dadurch gekennzeichnet, dass**
aus der Klassifikation aller Kontrollergebnisse für eine jeweilige Faltschachtel eine Fehlerkombination als ein digitaler String aus binären Werten erzeugt wird, die jeweils einem Kontrollergebnis der unterschiedlichen Qualitätsmerkmale entsprechen, und
für einen jeweiligen String in der Steuereinheit (32) eine Fehlergrenze hinterlegt ist, die angibt, wie häufig die zu dem digitalen String gehörende Fehlerkombination auftreten darf, bevor die zugehörige Faltschachtel auszuschleusen ist.

2. Verfahren zur Steuerung einer Faltschachtelmaschine nach Anspruch 1, **dadurch gekennzeichnet, dass** es sich bei den Qualitätsmerkmalen um die Qualität des Druckbildes, die Qualität einer Prägung, die Qualität einer Brailleschrift, das Vorhandensein eines Codes, eines Fensters, einer Leimnaht und/oder die Abmaße einer jeweiligen Faltschachtel handelt.

3. Computerprogramm mit Programmcodemitteln, um das Verfahren nach Anspruch 1 oder 2 durchzuführen, wenn das Computerprogramm auf einer mit einer Mehrzahl von Kontrolleinrichtungen (17, 19, 20) verbundenen Steuereinheit (32) zur Steuerung einer Faltschachtelmaschine (100) ausgeführt wird, die die Steuereinheit (32), eine Mehrzahl von Bearbeitungsstationen (4, 6, 7, 15, 18, 30), eine Mehrzahl von Kontrolleinrichtungen (17, 19, 20) mit Erfassungsmitteln zur Kontrolle der Qualität von Faltschachteln und eine von der Steuereinheit (32) angesteuerte Ausschleuseeinrichtung (31) aufweist.

4. Computerlesbarer Datenträger, auf dem das Computerprogramm nach Anspruch 3 gespeichert ist.

## Claims

1. A method for controlling a folding box machine (100), in particular a folding box gluing machine, comprising a plurality of processing stations (4, 6, 7, 15, 18, 30) and a plurality of control devices (17, 19, 20) with detection means to control the quality of folding boxes, wherein a respective control device (17, 19, 20) controls different quality features of a respective folding box,
wherein a respective control device (17, 19, 20) reports the result of the control to a control unit (32),
wherein target values for classifying the control results into results of sufficient quality and insufficient quality are stored in the control unit (32), and
wherein, depending on the evaluation of the classification of all control results, an ejection means (31) is activated by the control unit (32) to eject a folding box,
**characterized in that**,
based on the classification of all control results for a respective folding box, a combination of errors is generated as a digital string from binary values, each of which correspond to a control result of the different quality features, and
a detection limit for a respective string is stored in the control unit (32) which indicates how often the combination of errors assigned to the digital string may occur before the respective folding box is ejected.

2. The method for controlling a folding box machine according to claim 1,
**characterized in that**
the quality features are the quality of the printed image, the quality of an embossment, the quality of a braille lettering, the presence of a code, a window, a glue line, and/or the dimensions of a respective folding box.

3. A computer program comprising program code means, for carrying out the method of claim 1 or 2 when said computer program is run on a control unit (32) connected to a plurality of control devices (17, 19, 20) for controlling a folding box machine (100) comprising said control unit (32), a plurality of processing stations (4, 6, 7, 15, 18, 30), a plurality of control devices (17, 19, 20) with detection means to control the quality of folding boxes, and an ejection means (31) activated by the control unit (32).

4. A machine-readable data carrier storing the computer program according to claim 3.

## Revendications

1. Procédé de commande d'une machine pour boîtes pliantes (100), en particulier d'une machine à coller des boîtes pliantes, qui comprend une pluralité de postes de traitement (4, 6, 7, 15, 18, 30) et une pluralité de dispositifs de contrôle (17, 19, 20) avec des moyens de détection destinés à contrôler la qualité de boîtes pliantes,
dans lequel un dispositif de contrôle respectif (17, 19, 20) contrôle différentes caractéristiques de qualité d'une boîte pliante respective,
dans lequel un dispositif de contrôle respectif (17, 19, 20) envoie le résultat du contrôle à une unité de commande (32),
dans lequel des valeurs de consigne sont mémorisées dans l'unité de commande (32) pour la classification des résultats des contrôles en résultats suffisants et en résultats insuffisants en termes de qualité, et
dans lequel on commande au moyen de l'unité de commande (32) un dispositif d'écartement (31) pour écarter une boîte pliante en fonction de l'évaluation de la classification de tous les résultats des contrôles, **caractérisé en ce que**
on produit à partir de la classification de tous les résultats des contrôles pour une boîte pliante respective une combinaison de défauts sous la forme d'une suite numérique de valeurs binaires, qui correspondent respectivement à un résultat du contrôle des différentes caractéristiques de qualité, et
on mémorise dans l'unité de commande (32), pour une suite respective, une limite de défauts qui indique avec quelle fréquence la combinaison de défauts relative à la suite numérique peut se produire, avant que la boîte pliante respective doive être écartée.

2. Procédé de commande d'une machine pour boîtes pliantes selon la revendication 1, **caractérisé en ce que** les caractéristiques de qualité sont la qualité de l'image imprimée, la qualité d'une empreinte, la qualité d'une inscription en Braille, la présence d'un code, d'une fenêtre, d'un cordon de colle et/ou les dimensions d'une boîte pliante respective.

3. Programme informatique comportant des moyens de code de programme, permettant d'exécuter le procédé selon la revendication 1 ou 2, lorsque le programme informatique est exécuté par une unité de commande (32) reliée à une pluralité de dispositifs de contrôle (17, 19, 20) pour la commande d'une machine pour boîtes pliantes (100), qui comporte l'unité de commande (32), une pluralité de postes de traitement (4, 6, 7, 15, 18, 30), une pluralité de dispositifs de contrôle (17, 19, 20) avec des moyens de détection destinés à contrôler la qualité de boîtes pliantes et un dispositif d'écartement (31) commandé par l'unité de commande (32).

4. Support de données lisible par ordinateur, sur lequel est mémorisé le programme informatique selon la revendication 3.
